# FASCICULE DE BREVET EUROPEEN

(11) **EP 1 578 537 B1**
(45) Date de publication et mention de la délivrance du brevet: **31.10.2007**
(21) Numéro de dépôt: 03813892.1
(22) Date de dépôt: 16.12.2003
(51) Int. Cl.: B05B 11/00, B29C 65/56

(54) **PROCEDE D'INTEGRATION D'UN CLAPET ANTI-RETOUR A BILLE DANS UN CORPS DE POMPE**
VERFAHREN ZUM EINBAU EINES KUGEL-RÜCKSCHLAGVENTILS IN EINEM PUMPENKÖRPER
METHOD FOR INCORPORATING A BALL NON-RETURN VALVE IN A PUMP BODY

(30) Priorité: 26.12.2002 FR 0216703
(43) Date de publication de la demande: 28.09.2005
(73) Titulaire: REXAM DISPENSING SYSTEMS S.A.S.U., 76470 Le Tréport (FR)
(72) Inventeur: BOUGAMONT, Jean-Louis, F-76260 Eu (FR)
(74) Mandataire: Breese, Pierre
(86) Numéro de dépôt international: PCT/EP2003/014321
(87) Numéro de publication internationale: WO 2004/058412

(56) Documents cités:
- EP-A- 0 990 595
- US-B1- 6 343 916
- PATENT ABSTRACTS OF JAPAN vol. 015, no. 385 (C-0871), 27 septembre 1991 (1991-09-27) & JP 03 154664 A (YOSHINO KOGYOSHO CO LTD), 2 juillet 1991 (1991-07-02)
- PATENT ABSTRACTS OF JAPAN vol. 015, no. 392 (C-0873), 4 octobre 1991 (1991-10-04) & JP 03 161066 A (YOSHINO KOGYOSHO CO LTD), 11 juillet 1991 (1991-07-11)

## Description

La présente invention a pour objet l'intégration d'un clapet anti-retour à bille dans un corps de pompe.

Ce type de clapet comporte une bille coopérant avec un siège, en général conique, aménagé dans le fond du corps de pompe. Afin de remplir au mieux sa fonction de clapet anti-retour, la bille doit venir obturer rapidement le siège après pompage du produit, et par conséquent doit avoir une amplitude de mouvement limitée entre une première position, dans laquelle le clapet est ouvert, et une deuxième position dans laquelle le clapet est obturé.

Une solution connue, par exemple, à partir du EPO990595, consiste à enfermer la bille dans un espace ménagé à l'intérieur du corps de pompe. Pour empêcher la bille de sortir de cet espace, il est fréquent de former sur le corps de pompe, au-dessus de la bille, des contre-dépouilles qui définissent une ouverture sensiblement circulaire de diamètre inférieur à celui de la bille. Le mouvement de la bille est alors limité d'un coté par le siège du clapet et de l'autre par lesdites contre-dépouilles.

Plus les contre-dépouilles sont importantes, plus le diamètre de l'ouverture qu'elles, définissent est faible et meilleure est la retenue de la bille. Or, les procédés de moulage généralement utilisés pour réaliser le corps de pompe, à l'exemple du moulage par injection, interdisent la création directe de contre-dépouilles trop importantes dans ledit corps. -Ces dernières se révèlent en effet considérablement gênantes lors de l'étape de démoulage.

Aussi, pour éviter de créer des contre-dépouilles de faible relief qui retiennent mal la bille où des contre-dépouilles trop Importantes qui gênent le démoulage, il est fréquent d'avoir recours à une pièce supplémentaire.

Cette pièce disposée au-dessus de ta bille remplace les contre-dépouillés en fermant la cavité dans laquelle la bille est mobile, mais emprisonnée. Cependant, la fabrication d'une telle pièce représente un coût de production supplémentaire et son insertion dans le fond du corps de pompe peut s'avérer délicate. Une autre solution consiste, comme dans le Patent Abstract of Japan-vol 015-N°.385. (C-0871), à effectuer, après l'étape de moulage, une étape de façonnage des éléments de retenue de la bille par déformation radiale de nervures portées par la paroi interne du corps. Toutefois, le bord supérieur des nervures n'offre pas, avant poinçonnage, un volume de matière suffisant pour créer ensuite par repli, des moyens de retenue efficaces.

La présente invention se propose de résoudre les inconvénients des procédés existants et a pour objet l'intégration d'un clapet anti-retour à bille dans un corps de pompe, comprenant selon une caractéristique avantageuse, on réalise chaque portion d'extrémité avec un angle vif.

Un tel procédé permet de réaliser sans difficultés le moulage et le démoulage du corps de pompe. De préférence, on moule par injection le corps de pompe. De plus, il n'est plus nécessaire d'avoir recours à une pièce supplémentaire, ce qui facilite le montage du clapet et permet de réduire les coûts de production:

Avantageusement, les bords longitudinaux desdites nervures radiales s'inscrivent dans une surface cylindrique à base circulaire de diamètre inscrit légèrement supérieur à celui de la bille. L'amplitude du mouvement radial de la bille à l'intérieur du cylindre de révolution défini, est ainsi limitée de manière à favoriser le mouvement axial de la bille et par là même optimiser le fonctionnement du clapet.

Selon un mode préféré de réalisation de l'invention, on utilise, pour l'étape c) du procédé un outil introduit axialement à l'intérieur du corps de pompe. Cet outil peut présenter un embout plat, cette forme simple permettant de déformer facilement les portions d'extrémité des nervures. L'outil utilisé peut en outre être chauffant, la chaleur émise favorisant la déformation desdites portions.

Un deuxième objet de l'invention est un corps de pompe moulé, notamment lors de la mise en oeuvre du procédé défini ci-dessus.

Un tel corps de pompe comprend des nervures radiales sur sa surface interne, réalisées dans le fond du corps, présentant chacune un bord longitudinal et une portion d'extrémité détachée de la surface interne

et présentant un bord supérieur qui s'écarte de ladite surface interne en formant un angle aigu avec elle. L'angle précité est mesuré entre la surface interne du corps de pompe et le plan moyen du bord supérieur des portions d'extrémité.

Avantageusement, chaque portion d'extrémité présente un angle vif entre son bord longitudinal et son bord supérieur.

Une telle forme est utilisée lors de l'étape c) de déformation des portions d'extrémité du procédé décrit précédemment. En effet, en raison de l'inclinaison du bord supérieur, lorsqu'un outil introduit axialement dans le corps de pompe vient au contact dudit bord, la pression exercée par l'outil contribue à rabattre lesdites portions d'extrémités vers l'intérieur du corps de pompe.

Une fois la bille insérée dans le corps de pompe et une fois lesdites portions d'extrémité repliées, les rainures définissent une sorte de cage dans laquelle la bille est mobile mais emprisonnée. On obtient alors un ensemble constitué d'un corps de pompe et d'un clapet anti-retour à bille, dans lequel le corps de pompe comprend sur sa surface interne, au voisinage du siège du clapet, des nervures radiales présentant chacune un bord longitudinal et une portion d'extrémité détachée de la surface interne déformée plastiquement vers l'intérieur du corps de pompe, lesdits bords longitudinaux définissant entre eux un espace d'insertion de la bille, au voisinage dudit siège ; de préférence, cet espace est sensiblement cylindrique à base circulaire et de diamètre inscrit légèrement supérieur à celui de la bille.

Un autre objet de l'invention est une pompe comprenant un corps de pompe tel que défini précédemment après moulage et après déformation plastique.

L'invention et ses avantages seront mieux compris à la lecture de la description détaillée d'un mode de réalisation préféré de l'invention. La description qui suit se réfère aux dessins annexés sur lesquels :
- la figure 1 est une coupe transversale d'un corps de pompe moulé selon l'invention ;
- la figure 2A est une coupe transversale du corps de pompe de la figure 1 dans lequel est disposée une bille et dans lequel on introduit un outil à embout plat ;
- la figure 2B est une coupe selon le plan A-A de la figure 2a.
- la figure 3 est une coupe transversale du même corps de pompe après déformation plastique des portions d'extrémité desdites rainures, et ;
- la figure 4 est une coupe transversale d'un ensemble constitué d'un corps de pompe moulé et d'un clapet anti-retour à bille.

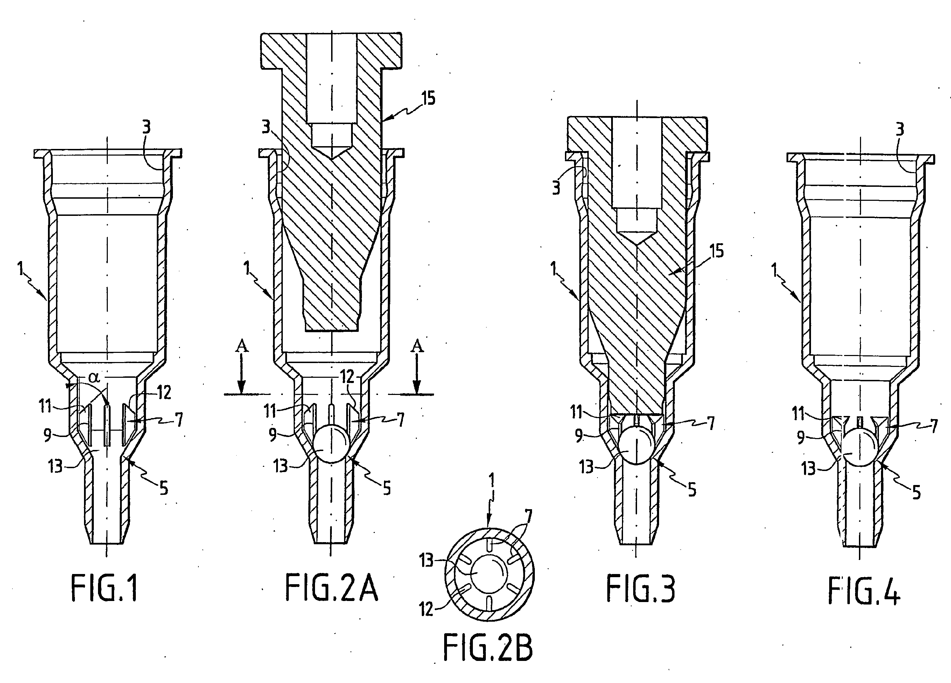

Le corps de pompe 1 moulé tel que représenté sur la figure 1 comprend, sur sa surface interne 3 et au-dessus du siège du clapet 5 destiné à être obturé par une bille, des nervures radiales 7.

Ces nervures 7 présentent chacune un bord longitudinal 9 et une portion d'extrémité 11 détachée de la surface interne 3, le bord supérieur plan 12, de la portion d'extrémité 11 s'écartant de la surface interne 3 en formant un angle α.aigu, avec elle.

De plus, du côté opposé à la surface interne 3, ladite portion d'extrémité 11 présente un angle vif, cet angle est défini par son bord longitudinal 9 et son bord supérieur 12. Dans l'exemple représenté, l'angle vif précité est complémentaire de l'angle α.

En référence à- la figure 2A, on introduit une bille 13 à l'intérieur du corps de pompe 1. Cette bille 13 vient alors se loger à l'intérieur de l'espace d'insertion défini par les bords longitudinaux 9 des nervures 11, au voisinage du siège du clapet. Ces bords s'inscrivent de préférence dans une surface cylindrique à base circulaire, de diamètre inscrit légèrement supérieur à celui de la bille 1, comme représenté sur la figure 2B. Un outil à embout plat 15 est ensuite introduit axialement à l'intérieur du corps de pompe 1.

En référence à la figure 3, l'embout plat de l'outil 15 vient au contact des portions d'extrémité 11 détachées de la surface interne 3 et exerce sur elles une pression qui les force à se replier vers l'intérieur du corps de pompe 1. Les portions d'extrémité 11 se rabattent de cette manière en raison de l'inclinaison de leurs bords supérieurs 12, sur lesquels la pression de l'outil 15 s'exerce.

Une fois déformées plastiquement, les portions d'extrémité 11 enferment la bille 13 à l'intérieur de l'espace défini par les bords longitudinaux 9 des nervures 7. La figure 4 représente l'ensemble obtenu, constitué du corps de pompe et du clapet anti-retour à bille intégré ainsi formé.

## Revendications

1. Procédé d'intégration d'un clapet anti-retour à bille dans un corps de pompe (1) comprenant
a) le moulage du corps de pompe (1) en ménageant sur sa surface interne (3), au voisinage du siège du clapet (5), des nervures radiales (7) présentant chacune un bord longitudinal (9) et une portion d'extrémité (11) détachée de la surface interne (3), les bords longitudinaux (9) définissant entre eux un espace d'insertion de la bille (13), au voisinage dudit siège (5) ;
b) l'introduction d'une bille (13) à l'intérieur de l'espace ménagé par lesdites nervures (7), et ;
c) la déformation de façon plastique des portions d'extrémité (11) desdites nervures (7) vers l'intérieur du corps de pompe, de façon à emprisonner la bille à l'intérieur dudit espace cecq on réalise chaque portion d'extrémité avec un bord supérieur plan (12) qui s'écarte de la surface interne (3) en formant un angle aigu (α) avec elle, de telle sorte que la déformation des portions d'extrémité contraire à les rabattre vers l'intérieur du corps de pompe.

2. Procédé selon la rev 1 cecq on réalise chaque portion d'extrémité (11) avec un angle vif.

3. Procédé selon la revendication 1 ou 2, **caractérisé en ce que** chaque bord longitudinal (9) s'inscrit dans une surface cylindrique à base circulaire de diamètre inscrit légèrement supérieur à celui de la bille (13).

4. Procédé selon l'une des revendications précédentes **caractérisé en ce qu'**on moule ledit corps de pompe (1) par injection.

5. Procédé selon l'une quelconque des revendications 1 à 4 **caractérisé en ce qu'**on déforme ladite portion d'extrémité (11) en utilisant un outil (15) à embout plat introduit axialement à l'intérieur du corps de pompe (1).

6. Procédé selon l'une quelconque des revendications 1 à 5, **caractérisé en ce qu'**on déforme ladite portion d'extrémité (11) en utilisant un outil (15) chauffant introduit axialement à l'intérieur du corps de pompe (1).

7. Corps de pompe moulé (1) **caractérisé en ce qu'**il comprend des nervures radiales (7) sur sa surface interne (3), réalisées dans le fonds du corps, présentant chacune un bord longitudinal (9) et une portion d'extrémité (11) détachée de la surface interne (3) et présentant un bord supérieur plan (12) qui s'écarte de la surface interne (3) en formant un angle aigu (α) avec elle, de telle sorte que la déformation des portions d'extrémité contribue à les rabattre vers l'intérieur du corps de pompe (1).

8. Corps de pompe (1) selon la revendication 7 **caractérisé en ce que** chaque portion d'extrémité (11) présente un angle vif.

9. Ensemble constitué d'un corps de pompe (1) et d'un clapet anti-retour à bille (13) **caractérisé en ce que** le corps de pompe (1) comprend sur sa surface interne (3), au voisinage du siège de clapet (5), des nervures radiales (7) présentant chacune un bord longitudinal (9) et une portion d'extrémité (11) détachée de la surface interne (3) déformée plastiquement vers l'intérieur du corps de pompe (1), les bords longitudinaux (9) définissant entre eux un espace d'insertion de la bille (13), au voisinage dudit siège (5) et présentant un bord supérieur plan (12) qui s'écarte de la surface interne (3) en formant un angle aigu (α) avec elle, de telle sorte que la déformation des portions d'extrémité contribue à les rabattre vers l'intérieur du corps de pompe (1).

10. Ensemble selon la revendication 9, **caractérisé en ce que** lesdits bord longitudinaux (9) s'inscrivent dans une surface cylindrique à base circulaire de diamètre inscrit légèrement supérieur à celui de la bille (13).

11. Pompe **caractérisée en ce qu'**elle comprend un corps de pompe (1) selon la revendication 9 ou 10.

## Claims

1. A method for integrating a ball check-valve in a pump casing (1) comprising:
a) moulding the pump casing (1), while arranging on its inner surface (3), in the proximity of the check-valve seat (5), radial ribs (7), each having a longitudinal edge (9) and an end portion (11) separated from the inner surface (3), the longitudinal edges (9) defining between them a gap for inserting the ball (13), in the proximity of said seat (5) ;
b) introducing a ball (13) into the gap provided by said ribs (7) and
c) elastically deforming end portions (11) of said ribs (7) inwards with respect to the pump casing so that the ball is caught inside said gap,
**characterized in that** each end portion is provided with a plane upper edge (12) which extends away from the inner surface (3) and forms an acute angle (α) therewith, so that the deformation of the end portions helps folding them inwards with respect to the pump casing (1).

2. A method according to claim 1, **characterized in that** each end portion (11) is provided with a square corner.

3. A method according to claim 1 or 2, **characterized in that** each longitudinal edge (9) is inscribed in a cylindrical surface having a circular base the inscribed diameter of which is slightly greater than that of the ball (13).

4. A method according to one of the preceding claims, **characterized in that** said pump casing (1) is injection moulded.

5. A method according to any one of the preceding claims 1 to 4, **characterized in that** said end portion (11) is deformed using a flat tip tool (15) axially introduced into the pump casing (1).

6. A method according to any one of the preceding claims 1 to 5, **characterized in that** said end portion (11) is deformed using a heating tool (15) axially introduced into the pump casing (1).

7. A moulded pump casing (1), **characterized in that** it comprises radial ribs (7)on its inner surface (3), provided in the bottom of the casing, and each having a longitudinal edge (9) and an end portion (11) separated from the inner surface (3), and being provided with a plane upper edge (12) which extends away from the inner surface (3) and forms an acute angle (α) therewith, so that the deformation of the end portions helps folding them inwards with respect to the pump casing (1).

8. A pump casing (1) according to claim 7, **characterized in that** each end portion (11) has a square corner.

9. An assembly composed of a pump casing (1) and a ball check-valve (13), **characterized in that** the pump casing (1) comprises, on its inner surface (3), in the proximity of the check-valve seat (5), radial ribs (7), each having a longitudinal edge (9) and an end portion (11) separated from the inner surface (3), elastically deformed inwards with respect to the pump casing (1), the longitudinal edges (9) defining between them a gap for inserting the ball (13), in the proximity of said seat (5) and provided with a plane upper edge (12) which extends away from the inner surface (3) and forms an acute angle (α) therewith, so that the deformation of the end portions helps folding them inwards with respect to the pump casing (1).

10. An assembly according to claim 9, **characterized in that** said longitudinal edges (9) are inscribed in a cylindrical surface having a circular base the inscribed diameter of which is slightly greater than that of the ball (13).

11. A pump **characterized in that** it comprises a pump casing (1) according to claim 9 or 10.

## Patentansprüche

1. Einbauverfahren eines Kugelrückschlagventils in einen Pumpenkörper (1), umfassend:
a) Formen des Pumpenkörpers (1) mit an seiner Innenfläche (3), in der Nähe des Ventilsitzes (5), angeordneten radialen Rippen (7), die jeweils einen Längsrand (9) und einen von der Innenfläche (11) gelösten Endabschnitt (11) aufweisen, wobei die Längsränder (9) zwischen sich einen Einfügungsraum für die Kugel (13) definieren, in der Nachbarschaft des genannten Sitzes (5);
b) Einführen einer Kugel (13) in den von den genannten Rippen (7) gebildeten Raum, und;
c) plastisches Umbiegen der Endabschnitte (11) der genannten Rippen (7) in den Pumpenkörper hinein, um die Kugel in dem genannten Raum festzuhalten,
**dadurch gekennzeichnet, dass** man jeden Endabschnitt mit einem flächigen oberen Rand (12) herstellt, der von der Innenfläche (3) absteht und mit ihr einen spitzen Winkel (α) bildet, so dass das Umbiegen der Endabschnitte dazu beiträgt, sie in den Pumpenkörper (1) hinein zu biegen.

2. Verfahren gemäß Anspruch 1, **dadurch gekennzeichnet, dass** man jeden Endabschnitt (11) mit einem spitzen Winkel herstellt.

3. Verfahren gemäß Anspruch 1 oder 2, **dadurch gekennzeichnet, dass** jeder Längsrand (9) eine zylindrische Fläche mit kreisförmiger Basis mit einem etwas größeren Durchmesser als derjenige der Kugel (13) umfasst.

4. Verfahren gemäß einem der vorangehenden Ansprüche, **dadurch gekennzeichnet, dass** der genannte Pumpenkörper (1) nach einem Einspritzverfahren geformt wird.

5. Verfahren gemäß einem der Ansprüche 1 bis 4, **dadurch gekennzeichnet, dass** man den genannten Endabschnitt (11) anhand eines Werkzeugs (15) mit flachem Ansatz umbiegt, das axial in den Pumpenkörper (1) eingeführt wird.

6. Verfahren gemäß einem der Ansprüche 1 bis 5, **dadurch gekennzeichnet, dass** man den genannten Endabschnitt (11) anhand eines Heizwerkzeugs (15) umbiegt, das axial in den Pumpenkörper (1) eingeführt wird.

7. Geformter Pumpenkörper (1), **dadurch gekennzeichnet, dass** er radiale Rippen (7) an seiner Innenfläche (3) umfasst, die im Boden des Körpers gebildet werden und jeweils einen Längsrand (9) und einen Endabschnitt (11) aufweisen, der von der Innenfläche (3) gelöst ist und einen flächigen oberen Rand (12) umfasst, der von der Innenfläche (3) absteht und einen spitzen Winkel (α) mit ihr bildet, so dass das Umbiegen der Endabschnitte dazu beiträgt, sie in den Pumpenkörper (1) hinein zu biegen.

8. Pumpenkörper (1) gemäß Anspruch 7, **dadurch gekennzeichnet, dass** jeder Endabschnitt (11) einen scharfen Winkel aufweist.

9. Baugruppe bestehend aus einem Pumpenkörper (1) und einem Kugelrückschlagventil (13), **dadurch gekennzeichnet, dass** der Pumpenkörper (1) an seiner Innenfläche (3), in der Nähe des Ventilsitzes (5), radiale Rippen (7) umfasst, die jeweils einen Längsrand (9) und einen von der Innenfläche (11) gelösten Endabschnitt (11) aufweisen, der plastisch in den Pumpenkörper (1) hinein gebogen ist, wobei die Längsränder (9) zwischen sich einen Einfügungsraum für die Kugel (13) definieren, in der Nachbarschaft des genannten Sitzes (5), und mit einem flächigen oberen Rand (12), der von der Innenfläche (3) absteht und mit ihr einen spitzen Winkel (α) bildet, so dass das Umbiegen der Endabschnitte dazu beiträgt, sie in den Pumpenkörper (1) hinein zu biegen.

10. Baugruppe gemäß Anspruch 9, **dadurch gekennzeichnet, dass** die genannten Längsränder (9) eine zylindrische Fläche mit kreisförmiger Basis mit einem etwas größeren Durchmesser als derjenige der Kugel (13) umfassen.

11. Pumpe, **dadurch gekennzeichnet, dass** sie einem Pumpenkörper (1) gemäß Anspruch 9 oder 10 umfasst.
